# EUROPÄISCHE PATENTANMELDUNG

(11) **EP 0 839 681 A2**
(43) Veröffentlichungstag der Anmeldung: **06.05.1998**
(21) Anmeldenummer: 97116831.5
(22) Anmeldetag: 27.09.1997
(51) Int. Cl.: B60K 17/22

(54) **Rohrförmiges Bauteil, insbesondere für eine Gelenkwelle**

(30) Priorität: 02.11.1996 DE 19645227
(71) Anmelder: Bayerische Motoren Werke Aktiengesellschaft, 80788 München (DE)
(72) Erfinder: Löffler, Albert, 83624 Otterfing (DE); Günther, Bernd, 85748 Garching (DE)

(57) **Zusammenfassung**

Es wird ein rohrförmiges Bauteil (1) zur Übertragung eines Drehmoments, insbesondere für eine Gelenkwelle für ein Kraftfahrzeug, beschrieben, das mindestens eine radial umlaufende Aufweitung (4) mit definiert reproduzierbarem plastischem Verformungsverhalten unter im wesentlichen axialer Krafteinwirkung besitzt. Die Aufweitung (4) besitzt gegenüber dem restlichen rohrförmigen Bauteil Festigkeitswerte, die ihre plastische Verformung mindestens in axialer Richtung bei geringerer spezifischer Krafteinwirkung zulassen. Diese Festigkeitswerte der Aufweitung werden zum Beispiel durch partielles Glühen erreicht.

## Beschreibung

Die Erfindung betrifft ein rohrförmiges Bauteil zur Übertragung eines Drehmoments, insbesondere für eine Gelenkwelle für ein Kraftfahrzeug.

Es ist bereits bekannt, Antriebswellen bzw. Gelenkwellen für Kraftfahrzeuge so zu gestalten, daß sie bei Axialbelastung durch ihre Verformung in Längsrichtung möglichst viel Energie abbauen können. Außerdem soll bei Axialbelastung die Kraftspitze einen vorgegebenen Wert nicht überschreiten. Dabei soll eine Verformung derart erfolgen, daß keine Bauteile in das Kraftfahrzeuginnere gelangen und keine Verletzungsgefahren für die Insassen entstehen. Aus diesem Grund wird bei Hohlwellen eine abgestufte Zone vorgesehen, bei der ein Rohrabschnitt mit geringerem Durchmesser über einen Übergangsabschnitt in einen Rohrabschnitt mit größerem Durchmesser übergeht. Bei axialer Crashbelastung verformt sich der Übergangsabschnitt in der Art eines etwa S-förmigen Rollbalges. Durch diese plastische Verformung wird Crashenergie abgebaut. Der Übergangsabschnitt mit den angrenzenden Rohrabschnitten wird auch als Stülpelement bzw. Stülprohr bezeichnet.

Ein solches rohrförmiges Bauteil, insbesondere für eine Gelenkwelle, beschreibt die DE 4227967 A1.

Wird nun die Dimensionierung einer Gelenkwelle nach den erforderlichen Festigkeitswerten des Stülprohrbereichs ausgelegt, so ist dieses kostenoptimiert nur für ein maximal übertragbares Drehmoment möglich.

Führt man die Gelenkwellenrohre mit dickerer Wandstärke oder höherer Festigkeit aus, mit dem Ziel, die Drehmomentübertragungskapazität zu verbessern, führt dies zu einer nicht erwünschten Erhöhung der Stülpkraft in axialer Richtung. Ein in Längsrichtung zu steifes Stülprohr besitzt jedoch kein optimales Crashverhalten mehr.

Deshalb ist es Aufgabe der Erfindung, eine Gelenkwelle mit integriertem Stülprohr zu schaffen, deren geometrische Abmessungen auch unabhängig von den Festigkeitswerten des Stülprohrs bezüglich Längsverformbarkeit gewählt werden können.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung besteht die Gelenkwelle mindestens teilweise aus einem rohrförmigen Bauteil mit mindestens einer radial umlaufenden Aufweitung mit definiert reproduzierbarem plastischem Verformungsverhalten unter im wesentlichen axialer Krafteinwirkung. Sie ist dadurch gekennzeichnet, daß mindestens eine Aufweitung gegenüber dem restlichen rohrförmigen Bauteil durch Wärmebehandlung Festigkeitswerte besitzt, die eine plastische Verformung mindestens in axialer Richtung bei geringerer spezifischer Krafteinwirkung zulassen.

Das hat den Vorteil, daß die Stülpkraft reduziert wird, ohne die Drehmomentübertragskapazität der Gelenkwelle zu beeinflussen. Zur Reduzierung der Stülpkraft wird der Außendurchmesser der Aufweitung, welcher wegen des größeren Widerstandsmomentes bezüglich Drehmomentübertragung unterkritisch ist, durch eine partielle Wärmebehandlung in der Festigkeit reduziert. Der bezüglich Drehmomentübertragung kritische Rohrbereich mit kleinerem Durchmesser bleibt unverändert.

Eine weitere bevorzugte Ausführung der Erfindung sieht vor, daß das rohrförmige Bauteil aus Aluminium besteht.

Das hat den Vorteil, daß die Gelenkwelle insgesamt bereits durch die Auswahl des Werkstoffes gewichtsoptimiert ist und gleichzeitig die gewünschten Festigkeitswerte der einzelnen Rohrbereiche und der Aufweitung durch die einfache Möglichkeit der Wärmebehandlung von Aluminium erreicht werden können.

Bei einer vorteilhaften Ausführung der Erfindung wird der schwächste Rohrquerschnitt während des Weichglühens durch Gas, Flüssigkeit oder Feststoff gekühlt. Dadurch wird vorteilhafterweise verhindert, daß durch den Glühvorgang die Drehmomentübertragungskapazität des Rohres beeinträchtigt wird.

Ein bevorzugtes Ausführungsbeispiel der Erfindung ist in der nachfolgenden Beschreibung und der zugehörigen Zeichnung näher dargestellt. Es zeigen:
- Figur 1: die Ansicht einer Gelenkwelle mit Stülpelement und
- Figur 2: einen Halbschnitt durch eine Gelenkwelle im Bereich der Stülpfalte mit Angabe des Wärmebehandlungsbereichs.

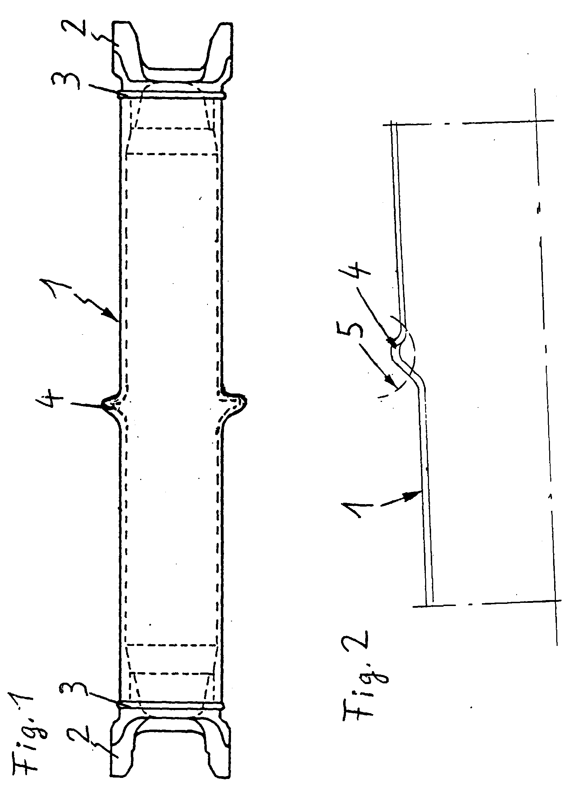

In Figur 1 ist eine Gelenkwelle dargestellt, die aus einem rohrförmigen Bauteil 1 mit an dessen Enden eingeschweißten Kreuzgelenkaufnahmen 2 besteht. Die Schweißnähte 3 verbinden die Kreuzgelenkaufnahmen 2 mit dem rohrförmigen Bauteil 1. Dieses besitzt an einer Stelle eine radial umlaufende Aufweitung 4. Sie dient als Stülpelement und ist in das rohrförmige Baute 1 eingeformt. Ebenso könnte die Aufweitung 4 als separates Rohrstück mit dem rohrförmigen Bauteil 1 auf andere Weise verbunden sein, zum Beispiel ebenfalls durch Schweißen. Die Aufweitung 4 besitzt ein definiert reproduzierbares plastisches Verformungsverhalten, unter im wesentlichen axialer Krafteinwirkung. Das rohrförmige Bauteil 1 wurde nach der erforderlichen Drehmomentübertragungskapazität dimensioniert, das heißt, Durchmesser, Wandstärke und Festigkeitswerte wurden dementsprechend ausgewählt. Dabei kann zum Beispiel ein stranggepreßtes oder längsnahtgeschweißtes Rohr aus einer naturharten oder aushärtbaren Legierung verwendet werden.

Damit nun die Aufweitung 4 das gewünschte plastische Verformungsverhalten für axiale Krafteinwirkung bekommt, wird diese partiell geglüht. Sie erhält so Festigkeitswerte, die eine plastische Verformung bei geringerer spezifischer Krafteinwirkung zulassen.

Der Bereich, in dem das rohrförmige Bauteil 1 geglüht ist, ist in Figur 2 mit einem Kreis 5 ausgeschnitten dargestellt. In Figur 2 wird zusätzlich noch gezeigt, daß der Durchmesser, der von der Aufweitung 4 nach links und rechts ausgehenden Gelenkwellenhälften, verschieden sein kann.

## Patentansprüche

1. Rohrförmiges Bauteil (1) zur Übertragung eines Drehmoments, insbesondere für eine Gelenkwelle für ein Kraftfahrzeug, mit mindestens einer radial umlaufenden Aufweitung (4) mit definiert reproduzierbarem plastischem Verformungsverhalten unter im wesentlichen axialer Krafteinwirkung, dadurch gekennzeichnet, daß mindestens eine Aufweitung (4) gegenüber dem restlichen rohrförmigen Bauteil (1) durch Wärmebehandlung Festigkeitswerte besitzt, die eine plastische Verformung mindestens in axialer Richtung bei geringerer spezifischer Krafteinwirkung zulassen.

2. Rohrförmiges Bauteil (1) nach Anspruch 1, dadurch gekennzeichnet, daß es aus einer ausgehärteten oder naturharten Legierung besteht, wobei die Aufweitung (4) auf niedrigere Festigkeit geglüht ist.

3. Rohrförmiges Bauteil (1) nach Anspruch 1 oder 2, dadurch gekennzeichnet, daß es aus Aluminium besteht.

4. Rohrförmiges Bauteil (1) nach einem der Ansprüche 1 bis 3, dadurch gekennzeichnet, daß während des Glühvorgangs der schwächste Rohrquerschnitt zur Erhaltung der Festigkeit gekühlt wird.
